# EUROPEAN PATENT SPECIFICATION

(11) **EP 4 344 956 B1**
(45) Date of publication and mention of the grant of the patent: **06.08.2025**
(21) Application number: 23197198.7
(22) Date of filing: 13.09.2023
(51) Int. Cl.: B60R 7/04

(54) **STORAGE BOX OF CONSOLE OF VEHICLE, AND VEHICLE COMPRISING THE SAME**
AUFBEWAHRUNGSBOX EINER KONSOLE EINES FAHRZEUGS UND FAHRZEUG DAMIT
BOÎTE DE RANGEMENT DE CONSOLE DE VÉHICULE ET VÉHICULE LA COMPRENANT

(30) Priority: 28.09.2022 CN 202211195435
(43) Date of publication of application: 03.04.2024
(73) Proprietor: Stellantis Auto SAS, 78300 Poissy (FR)
(72) Inventor: LV, QINSANG, Shanghai, 200233 (CN); WENG, LEI, SHANGAI, 200233 (CN); FANG, YUAN, Shanghai, 200233 (CN); HAN, BO, Shanghai, 200233 (CN)
(74) Representative: BCIP

(56) References cited:
- US-A1- 2009 072 568
- US-B1- 8 579 348
- US-B2- 10 086 767

## Description

### RELATED FIELD

The present disclosure generally relates to the technical field of vehicle components, and more particularly, to a storage box of a console of a vehicle, and a vehicle comprising the same.

### BACKGROUND

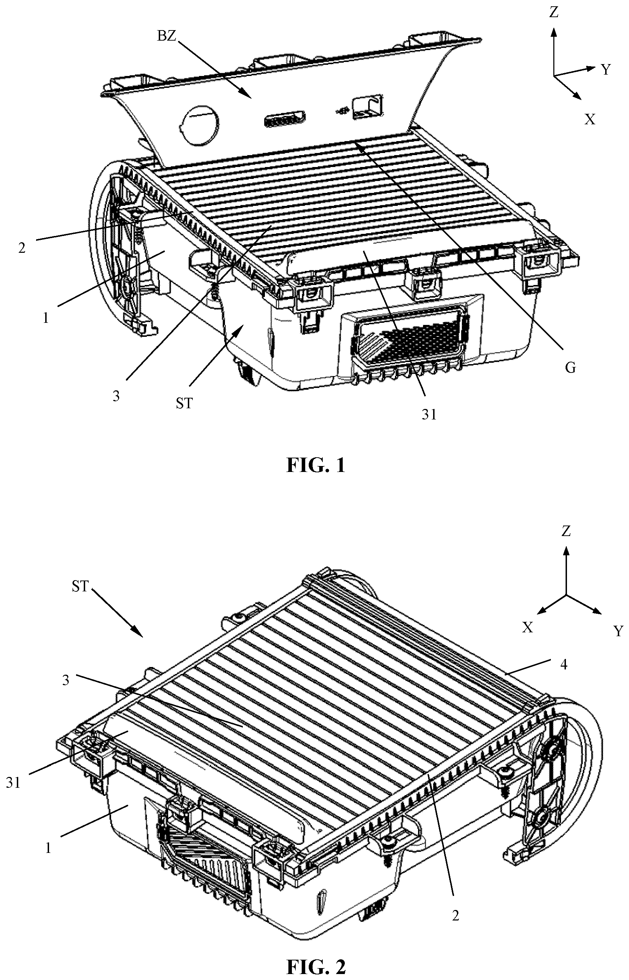

A console of a vehicle (i.e. a middle passage between two front seats of a vehicle) generally comprises a storage box. FIG. 1 is an overall schematic view of an existing storage box ST of a console. As shown in FIG. 1, the storage box ST comprises a housing 1, a rail structure 2 fixed to two sides of a top opening of the housing 1, and a sliding cover 3 capable of sliding along the rail structure 2 to open or close the housing 1. A handle 31 protruding upwards is provided at a rear end of the sliding cover 3, such that a user can move the sliding cover 3 to open the housing 1 by pushing the handle 31 forwards, and can move the sliding cover 3 to close the housing 1 by pulling the handle 31 backwards.

Further as shown in FIG. 1, for such storage box ST, a functional bezel BZ (e.g. a USB bezel) of an instrument panel positioned at the front of the vehicle is arranged above the storage box and immediately adjacent to a front end of the sliding cover 3. In accordance with design requirements, the dimension of the Z-directional gap G between the bottom of the functional bezel BZ and the sliding cover 3 shall be controlled to, for example, about 2.5mm, so as to avoid a potential collision between the sliding cover 3 and the bottom of the functional bezel BZ during a sliding process due to the manufacturing tolerance of the instrument panel and the console (the accumulated tolerance is large at this position).

The defect of such storage box ST lies in that, if the user places objects with a tiny thickness such as cards and coins on the sliding cover 3, these objects may be moved forwards through the gap G and fall to a position behind the instrument panel, and the fallen objects may be retrieved only by means of removing the entire front portion of the console, thus causing great inconvenience. Further, for reasons such as the manufacturing tolerance mentioned above, it is unable to provide a blocking structure, such as a protruding edge, at the bottom of the functional bezel BZ to avoid interference of the sliding cover 3 with the blocking structure when it slides. From the prior art US2009072568A1, showing the preamble of claim 1, US10086767B2 and US8579348B1 are known.

### SUMMARY

The present disclosure aims to overcome the defect in the prior art by providing a storage box of a console of a vehicle that can effectively prevent an object mistakenly placed by a user on a sliding cover from falling to a position where the object is difficult to be retrieved, wherein the sliding cover does not interfere with other components when it slides.

To this end, a first aspect of the present disclosure provides a storage box of a console of a vehicle with the features of claim 1, comprising: a housing having an opening; a rail structure mounted to the housing and comprising a longitudinal rail extending along an edge of the opening; a sliding cover slidably mounted to the rail structure to open or close the opening; and a blocking member comprising a body, a fixing portion, and a first blocking portion, wherein the body extends transversely above the sliding cover and adjacent to an end of the longitudinal rail, the fixing portion is connected to an end of the body and fixed to the longitudinal rail, and the first blocking portion protrudes from the body towards the sliding cover and extends along entire of the transverse length of the body.

According to the invention, the storage box further comprises a second blocking portion protruding upwards from the sliding cover below the blocking member and extending along entire of the transverse length of the sliding cover, wherein the height of the second blocking portion protruding from the sliding cover is less than the distance between the sliding cover and the first blocking portion.

According to an alternative embodiment of the present disclosure, the second blocking portion is integrally formed with at least a part of the sliding cover.

According to an alternative embodiment of the present disclosure, the sliding cover comprises a base layer and a flexible material layer arranged on the base layer, wherein the second blocking portion is integrally formed with the flexible material layer.

According to an alternative embodiment of the present disclosure, the first blocking portion has a pointed tip oriented towards the sliding cover.

According to an alternative embodiment of the present disclosure, the blocking member further comprises a reinforcing rib protruding from a surface of the body opposite to the first blocking portion and extending along at least a part of the transverse length of the body.

According to an alternative embodiment of the present disclosure, the fixing portion is welded to the longitudinal rail.

According to an alternative embodiment of the present disclosure, the storage box further comprises a handle protruding upwards from the sliding cover and adjacent to a rear end of the sliding cover, and extending along at least a part of the transverse length of the sliding cover.

A second aspect of the present disclosure provides a vehicle, with the features of claim 8, comprising the storage box of a console according to the first aspect of the present disclosure.

Compared with the prior art, the storage box of a console according to the present disclosure has various beneficial effects, in particular: by arranging the blocking member, an object with a tiny thickness, that is mistakenly placed by a user on the sliding cover, can be prevented from falling from the sliding cover to a position where the object is difficult to be retrieved (such as a position behind the instrument panel) no matter the storage box is closed or partially opened, and the gap between the blocking member and the sliding cover is easy to control such that there is no potential collision between the sliding cover and the bottom of the blocking member when the sliding cover slides; in addition, the blocking member has a simple structure and is easy to be manufactured and mounted, such that it can be widely used in various types of storage boxes of console.

### BRIEF DESCRIPTION OF THE DRAWINGS

Other features and advantages of the present disclosure will be readily understood through the following preferred embodiments described in detail with reference to the accompanying drawings, in which a same reference numeral indicates a same or similar component.
FIG. 1 is an overall schematic view of an existing storage box of a console arranged below a functional bezel of an instrument panel of a vehicle;
FIG. 2 is an overall schematic view of an embodiment of a storage box of a console according to the present disclosure;
FIG. 3A is a schematic view of a sliding cover of the storage box shown in FIG. 2;
FIG. 3B is a schematic view of a blocking member of the storage box shown in FIG. 2;
FIG. 3C is a schematic view of a housing of the storage box shown in FIG. 2;
FIG. 3D is a schematic view of a rail structure of the storage box shown in FIG. 2;
FIG. 4 is a partial sectional view of the storage box shown in FIG. 2 and arranged below a functional bezel of an instrument panel;
FIG. 5A is a schematic view of the anti-falling function of the storage box shown in FIG. 2 when it is closed; and
FIG. 5B is a schematic view of the anti-falling function of the storage box shown in FIG. 2 when it is opened.

It is conceivable that the drawings are not only used to explain the present disclosure, but also help to define the present disclosure when necessary.

### DETAILED DESCRIPTION

The implementation and usage of the embodiments are discussed in detail below. However, it is conceivable that the specific embodiments discussed herein are merely intended to illustrate specific ways of implementing and using the present disclosure, and are not intended to limit the protection scope of the present disclosure.

In the specification, when describing structures and positions of components, the directional expressions such as "up", "down", "left", "right", "front", and "rear" are defined with reference to the orientations of the vehicle.

In the drawings, the X direction corresponds to the longitudinal direction of the vehicle (i.e., the front-rear direction), the Y direction corresponds to the transverse direction of the vehicle (i.e., the left-right direction), and the Z direction corresponds to the vertical direction of the vehicle (i.e., the up-down direction).

In addition, in the specification, the terms, such as "mounted to" and "connected to", should be understood in a broad sense unless otherwise specified and defined. For example, "connected to" may be "fixedly connected to", "detachably connected to" or "integrally connected to", and may be "directly connected to", "indirectly connected to" or "associated with (something) under some effect". For those skilled in the art, the specific meanings of the above terms in the specification can be understood according to specific circumstances.

A preferred embodiment of a storage box ST of a console according to the present disclosure is described below with reference to FIGS. 2, 3A to 3D and 4. As shown in the figures, the storage box ST mainly comprises a housing 1, a rail structure 2, a sliding cover 3 and a blocking member 4.

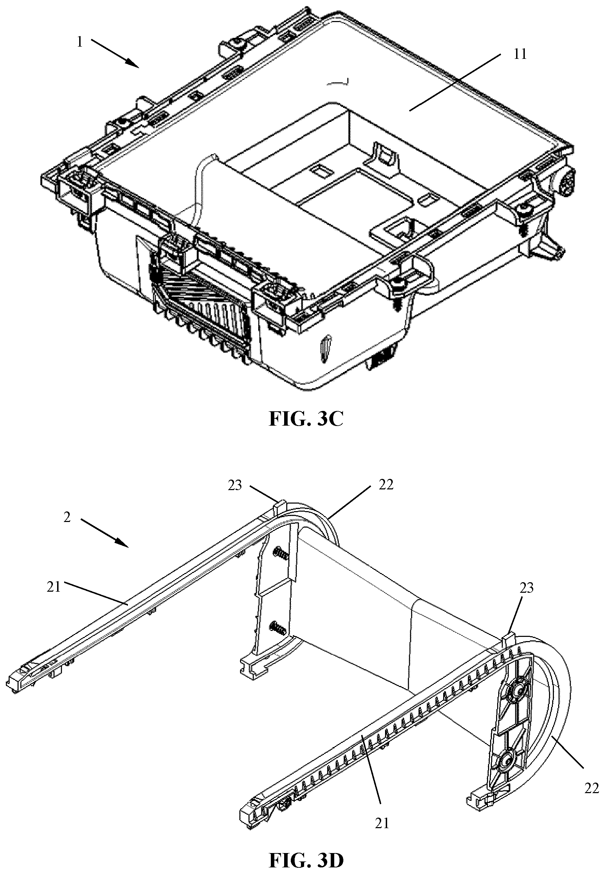

As shown in FIGS. 3C and 3D, the housing 1 delimits a storage space having an opening 11 for storing various objects. The rail structure 2 is mounted to the housing 1 by, for example, screwing or welding, and comprises a longitudinal rail 21 extending along two opposite longitudinal edges of the opening 11 and a curved rail 22 extending from the front end of the longitudinal rail 21 and bent downwards. In the illustrated embodiment, a welding portion 23 protruding upwards is provided at a position of the front end of the longitudinal rail 21 connected to the curved rail 22.

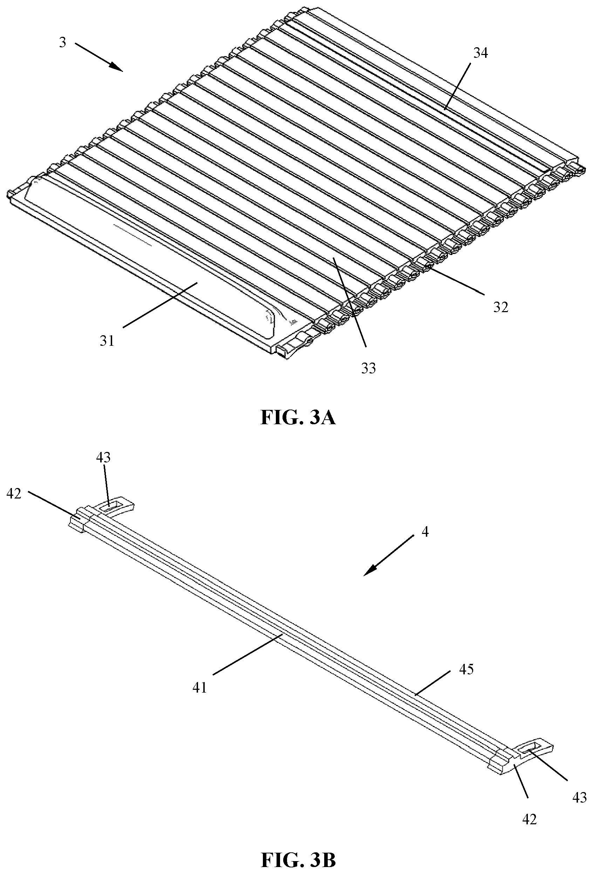

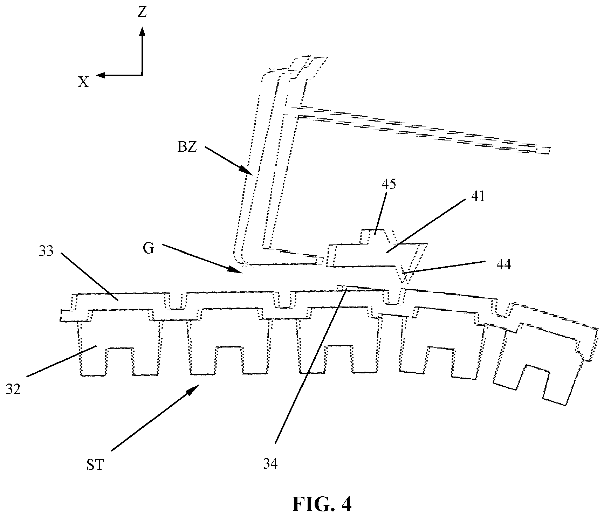

As shown in FIGS. 3A and 4, the sliding cover 3 is slidably mounted to the rail structure 2. More particularly, the sliding cover 3 comprises a base layer 32 composed of a plurality of, for example, plastic base units, and a flexible material layer 33 (for example, made of rubber material) fixedly arranged on the base layer 32 and capable of connecting these base units. It is conceivable that such configuration of the sliding cover 3 not only has sufficient strength, but also is suitable for bending. When the sliding cover 3 slides entirely onto the longitudinal rail 21 (as shown in FIG. 2), the sliding cover 3 closes the opening 11 and the storage box ST is thus closed. When the sliding cover 3 slides forwards such that at least a part of the sliding cover 3 is positioned on the curved rail 22, the sliding cover 3 at least partially opens the opening 11, and the storage box ST is thus at least partially opened.

In order to make it easy for a user to push or pull the sliding cover 3 in the longitudinal direction, the storage box ST preferably further comprises a handle 31 protruding upwards from the sliding cover 3 and adjacent to the rear end of the sliding cover 3, and extending along at least a part of the transverse length of the sliding cover 3 preferably along entire of the transverse length of the sliding cover 3. It is conceivable that the shape, position and material of the handle 31 are not limitative. For example, the handle 31 may be configured such that one part of the handle 31 is integrally formed with the base layer 32, and another part thereof is integrally formed with the flexible material layer 33.

As shown in FIGS. 3B and 4, the blocking member 4 is, for example, a plastic member and mainly comprises a body 41, a fixing portion 42 and a first blocking portion 44. The body 41 extends transversely above the sliding cover 3 and adjacent to the front end of the longitudinal rail 21. The fixing portion 42 is connected to two transverse ends of the body 41 and fixed to the front end of the longitudinal rail 21. In the illustrated embodiment, the fixing portion 42 is provided with a welding hole 43 having a shape mated with the welding portion 23 provided on the longitudinal rail 21, so as to fix the blocking member 4 to the longitudinal rail 21 by welding the fixing portion 42 to the longitudinal rail 21.

The first blocking portion 44 protrudes from the bottom of the body 41 towards the sliding cover 3 and extends along entire of the transverse length of the body 41. In the illustrated embodiment, the first blocking portion 44 is a blocking hook having a pointed tip oriented towards the sliding cover 3. Since the tiny gap between the bottom of the first blocking portion 44 and the sliding cover 3 can be precisely controlled, an object with a tiny thickness, such as a card or a coin that is mistakenly placed by the user on the sliding cover 3, can be prevented from sliding forwards and falling without hindering the sliding of the sliding cover 3. Further, the blocking member 4 further comprises a reinforcing rib 45 protruding upwards from a surface of the body 41 opposite to the first blocking portion 44 and extending along at least a part of the transverse length of the body 41, preferably along entire of the transverse length of the body 41, so as to increase the strength of the blocking member 4.

In addition, as shown in FIGS. 3A and 4, the storage box ST further comprises a second blocking portion 34 that is a protrusion protruding upwards from the sliding cover 3 below the blocking member 4 and extending along entire of the transverse length of the sliding cover 3. The height of the second blocking portion 34 protruding from the sliding cover 3 is less than the distance between the sliding cover 3 and the bottom of the first blocking portion 44, so as not to hinder the sliding of the sliding cover 3 below the blocking member 4. Preferably, the second blocking portion 34 is integrally formed with at least a part of the sliding cover 3, for example, with the flexible material layer 33.

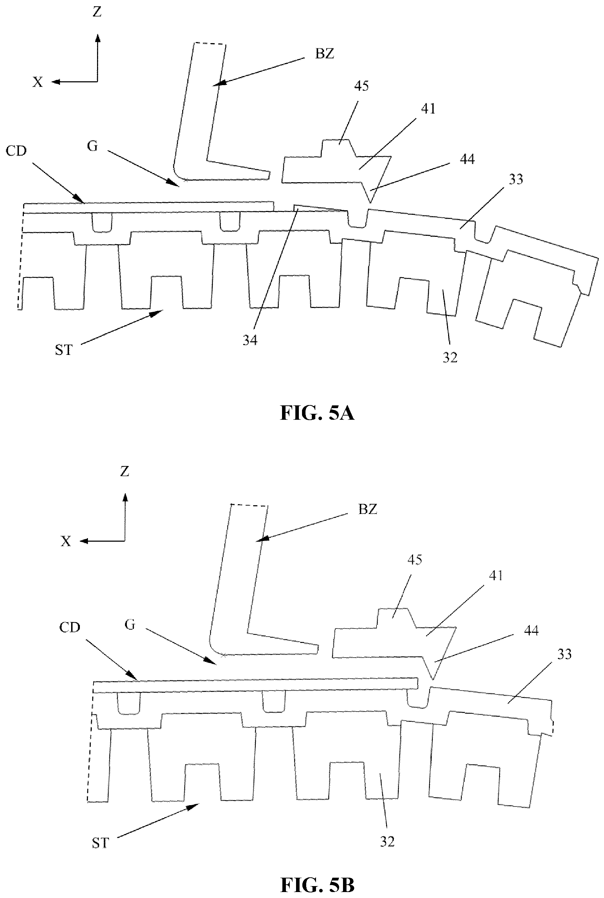

The principle of the anti-falling function of the storage box ST is described below with reference to FIGS. 5A and 5B. As mentioned above, the functional bezel BZ (e.g. the USB bezel) of the instrument panel positioned at the front of the vehicle is arranged above the storage box and immediately adjacent to the front end of the sliding cover 3, and an object with a tiny thickness, such as a card or a coin, can easily pass through the gap G between the bottom of the functional bezel BZ and the sliding cover 3 and fall to a position where the object is difficult to be retrieved, such as a position behind the instrument panel. Therefore, the present disclosure overcomes the defect that the object is easy to fall by the arrangement of the blocking member. The blocking member is for example arranged on the front side of the functional bezel BZ with respect to the X direction of the vehicle, such that it is invisible from the vehicle compartment.

As shown in FIG. 5A, if the user places a card CD having a thickness less than the distance of the gap G on the sliding cover 3 when the storage box ST is closed, the card CD cannot continue to slide forwards to fall as it is blocked by at least one of the first blocking portion 44 and the second blocking portion 34 after it passes through the gap G by sliding forwards. As for which blocking portion blocks the card, it depends on the relative position between the first blocking portion 44 and the second blocking portion 34 in the front-rear direction. For example, in the illustrated situation, the second blocking portion 34 is positioned at the rear of the first blocking portion 44, such that the card CD is blocked by the second blocking portion 34. With the second blocking portion 34, an object with a very tiny thickness (e.g., a film having a thickness less than that of a normal card, even less than the distance between the bottom of the first blocking portion 44 and the sliding cover 3) can also be blocked from sliding forwards to fall.

As shown in FIG. 5B, if the user places the card CD having a thickness less than the distance of the gap G on the sliding cover 3 when the storage box ST is opened, the card CD cannot continue to slide forwards to fall as it is blocked by the first blocking portion 44 after it passes through the gap G by sliding forwards. The second blocking portion 34 can drive the blocked card CD to slide backwards when the sliding cover 3 slides backwards again to close the storage box ST, thereby facilitating retrieval of the card CD.

The technical contents and features of the present disclosure have been disclosed above. However, it is conceivable that those skilled in the art can make various changes and improvements to the above-disclosed conception under the creative concept of the present disclosure, and all these various changes and improvements fall within the protection scope of the present disclosure.

The description of the above embodiments is exemplary rather than limitative, and the protection scope of the present disclosure is defined by the appended claims.

## Claims

1. A storage box of a console of a vehicle, comprising:
a housing (1) having an opening (11);
a rail structure (2) mounted to the housing (1) and comprising a longitudinal rail (21) extending along two opposite longitudinal edges of the opening (11); and
a sliding cover (3) slidably mounted to the rail structure (2) to open or close the opening (11);
wherein the storage box further comprises a blocking member (4) comprising:
a body (41) extending transversely above the sliding cover (3) and adjacent to an end of the longitudinal rail (21);
a fixing portion (42) connected to an end of the body (41) and fixed to the longitudinal rail (21); and
a first blocking portion (44) protruding from the body (41) towards the sliding cover (3) and extending along entire of the transverse length of the body (41) **characterized in that** the storage box further comprises a second blocking portion (34) protruding upwards from the sliding cover (3) below the blocking member (4) and extending along entire of the transverse length of the sliding cover (3), and wherein the height of the second blocking portion (34) protruding from the sliding cover (3) is less than the distance between the sliding cover (3) and the first blocking portion (44).

2. The storage box of a console according to claim 1, wherein the second blocking portion (34) is integrally formed with at least a part of the sliding cover (3).

3. The storage box of a console according to claim 2, wherein the sliding cover (3) comprises a base layer (32) and a flexible material layer (33) arranged on the base layer (32), and wherein the second blocking portion (34) is integrally formed with the flexible material layer (33).

4. The storage box of a console according to any one of claims 1-3, wherein the first blocking portion (44) has a pointed tip oriented towards the sliding cover (3).

5. The storage box of a console according to any one of claims 1-3, wherein the blocking member (4) further comprises a reinforcing rib (45) protruding from a surface of the body (41) opposite to the first blocking portion (44) and extending along at least a part of the transverse length of the body (41).

6. The storage box of a console according to any one of claims 1-3, wherein the fixing portion (42) is welded to the longitudinal rail (21).

7. The storage box of a console according to any one of claims 1-3, wherein the storage box further comprises a handle (31) protruding upwards from the sliding cover (3) and adjacent to a rear end of the sliding cover (3), and extending along at least a part of the transverse length of the sliding cover (3).

8. A vehicle comprising the storage box of a console according to any one of claims 1-7.

## Patentansprüche

1. Ein Ablagefach für eine Fahrzeugkonsole, umfassend: ein Gehäuse (1) mit einer Öffnung (11); eine am Gehäuse (1) montierte Schienenstruktur (2) mit einer Längsschiene (21), die sich entlang zweier gegenüberliegender Längskanten der Öffnung (11) erstreckt; und eine verschiebbare Schiebeabdeckung (3), die zum Öffnen oder Schließen der Öffnung (11) verschiebbar an der Schienenstruktur (2) montiert ist; wobei das Ablagefach ferner ein Sperrelement (4) umfasst, umfassend: einen Körper (41), der sich quer über der Schiebeabdeckung (3) und neben einem Ende der Längsschiene (21) erstreckt; einen Befestigungsabschnitt (42), der mit einem Ende des Körpers (41) verbunden und an der Längsschiene (21) befestigt ist; und einen ersten Sperrabschnitt (44), der vom Körper (41) in Richtung der Schiebeabdeckung (3) vorsteht und sich über die gesamte Querlänge des Körpers (41) erstreckt. Der Aufbewahrungsbehälter weist ferner einen zweiten Sperrabschnitt (34) auf, der unterhalb des Sperrelements (4) von der Schiebeabdeckung (3) nach oben vorsteht und sich über die gesamte Querlänge der Schiebeabdeckung (3) erstreckt. Die Höhe des zweiten Sperrabschnitts (34), der von der Schiebeabdeckung (3) vorsteht, ist geringer als der Abstand zwischen der Schiebeabdeckung (3) und dem ersten Sperrabschnitt (44).

2. Aufbewahrungsbehälter einer Konsole nach Anspruch 1, wobei der zweite Sperrabschnitt (34) integral mit zumindest einem Teil der Schiebeabdeckung (3) ausgebildet ist.

3. Ablagefach einer Konsole nach Anspruch 2, wobei die Schiebeabdeckung (3) eine Basisschicht (32) und eine darauf angeordnete flexible Materialschicht (33) umfasst, wobei der zweite Sperrabschnitt (34) integral mit der flexiblen Materialschicht (33) ausgebildet ist.

4. Ablagefach einer Konsole nach einem der Ansprüche 1-3, wobei der erste Sperrabschnitt (44) eine zum Schiebedeckel (3) gerichtete Spitze aufweist.

5. Ablagefach einer Konsole nach einem der Ansprüche 1-3, wobei das Sperrelement (4) zusätzlich eine Verstärkungsrippe (45) umfasst, die von einer dem ersten Sperrabschnitt (44) gegenüberliegenden Oberfläche des Korpus (41) absteht und sich über mindestens einen Teil der Querlänge des Korpus (41) erstreckt.

6. Ablagefach einer Konsole nach einem der Ansprüche 1-3, wobei der Befestigungsabschnitt (42) mit der Längsschiene (21) verschweißt ist.

7. Das Ablagefach einer Konsole nach einem der Ansprüche 1-3, wobei das Ablagefach zusätzlich einen Griff (31) umfasst, der nach oben aus der Schiebeabdeckung (3) herausragt und sich neben deren hinterem Ende befindet und sich über mindestens einen Teil der Querlänge der Schiebeabdeckung (3) erstreckt.

8. Ein Fahrzeug mit dem Ablagefach einer Konsole nach einem der Ansprüche 1-7.

## Revendications

1. Coffre de rangement pour console de véhicule, comprenant : un boîtier (1) doté d'une ouverture (11) ; une structure de rail (2) montée sur le boîtier (1) et comprenant un rail longitudinal (21) s'étendant le long de deux bords longitudinaux opposés de l'ouverture (11) ; et un couvercle coulissant (3) monté coulissant sur la structure de rail (2) pour ouvrir ou fermer l'ouverture (11) ; le coffre de rangement comprenant en outre un élément de blocage (4) comprenant : un corps (41) s'étendant transversalement au-dessus du couvercle coulissant (3) et adjacent à une extrémité du rail longitudinal (21) ; une partie de fixation (42) reliée à une extrémité du corps (41) et fixée au rail longitudinal (21) ; et une première partie de blocage (44) faisant saillie du corps (41) vers le couvercle coulissant (3) et s'étendant sur toute la longueur transversale du corps (41). Le boîtier de rangement comprend en outre une seconde partie de blocage (34) faisant saillie vers le haut du couvercle coulissant (3) sous l'élément de blocage (4) et s'étendant sur toute la longueur transversale du couvercle coulissant (3). La hauteur de la seconde partie de blocage (34) faisant saillie du couvercle coulissant (3) est inférieure à la distance entre le couvercle coulissant (3) et la première partie de blocage (44).

2. Boîtier de rangement pour console selon la revendication 1, dans lequel la seconde partie de blocage (34) est solidaire d'au moins une partie du couvercle coulissant (3).

3. Coffre de rangement pour console selon la revendication 2, dans lequel le couvercle coulissant (3) comprend une couche de base (32) et une couche de matériau flexible (33) disposée sur la couche de base (32), et dans lequel la seconde partie de blocage (34) est solidaire de la couche de matériau flexible (33).

4. Coffre de rangement pour console selon l'une quelconque des revendications 1 à 3, dans lequel la première partie de blocage (44) présente une pointe orientée vers le couvercle coulissant (3).

5. Coffre de rangement pour console selon l'une quelconque des revendications 1 à 3, dans lequel l'élément de blocage (4) comprend en outre une nervure de renfort (45) faisant saillie depuis une surface du corps (41) opposée à la première partie de blocage (44) et s'étendant sur au moins une partie de la longueur transversale du corps (41).

6. Coffre de rangement pour console selon l'une quelconque des revendications 1 à 3, dans lequel la partie de fixation (42) est soudée au rail longitudinal (21).

7. Coffre de rangement pour console selon l'une quelconque des revendications 1 à 3, comprenant en outre une poignée (31) faisant saillie vers le haut depuis le couvercle coulissant (3) et adjacente à une extrémité arrière de ce dernier, et s'étendant sur au moins une partie de la longueur transversale du couvercle coulissant (3).

8. Véhicule comprenant le coffre de rangement pour console selon l'une quelconque des revendications 1 à 7.
